(19) Europäisches Patentamt
European Patent Office
Office européen des brevets

(11) **EP 2 936 962 B1**

(12) **EUROPÄISCHE PATENTSCHRIFT**

(45) Veröffentlichungstag und Bekanntmachung des Hinweises auf die Patenterteilung:
**30.08.2017   Patentblatt 2017/35**

(51) Int Cl.:
*A01D 41/12* *(2006.01)*

(21) Anmeldenummer: **15153972.3**

(22) Anmeldetag: **05.02.2015**

(54) **Fahrzeug mit Streugutverteilvorrichtung**

Vehicle with spread goods distribution device

Véhicule doté d'un dispositif d'épandage

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.04.2014   DE 102014005906**

(43) Veröffentlichungstag der Anmeldung:
**28.10.2015   Patentblatt 2015/44**

(73) Patentinhaber: **CLAAS Selbstfahrende Erntemaschinen GmbH 33428 Harsewinkel (DE)**

(72) Erfinder:
• **Beulke, Christian 33428 Harsewinkel (DE)**
• **Brinkmann, Jörn 33428 Harsewinkel (DE)**
• **Ducrée, Dirk 59939 Olsberg (DE)**

(56) Entgegenhaltungen:
**EP-A1- 1 570 726      EP-A1- 1 985 170
DE-A1- 10 342 922**

**Beschreibung**

Die vorliegende Erfindung betrifft ein Fahrzeug mit einer Aufnahmeeinrichtung für Erntegut von einer Feldfläche, einer Verarbeitungsstrecke, in der Streugut von dem Erntegut abgeschieden wird, und einer Verteileinrichtung zum Ausstoßen des Streuguts auf die Feldfläche. Typischerweise ist ein solches Fahrzeug ein Mähdrescher, und die Verarbeitungsstrecke umfasst ein Dreschwerk, in welchem der Kornanteil des Ernteguts vom Nichtkornanteil geschieden wird, um gespeichert zu werden, während der Nichtkornanteil fortlaufend auf die abgeerntete Feldfläche verstreut wird und dabei einen Streifen entlang des von dem Mähdrescher gefahrenen Weges bildet. Der verstreute Nichtkornanteil, hier auch als Streugut bezeichnet, kann untergepflügt werden, oder er kann auf der Feldfläche liegen bleiben, um eine Mulchschicht zu bilden. In beiden Fällen sollte er möglichst gleichmäßig über die Feldfläche verteilt sein. Dafür muss die Breite des vom Streugut gebildeten Streifens möglichst exakt mit der Arbeitsbreite der Aufnahmeeinrichtung übereinstimmen. Ist der Streifen schmaler, dann bleibt ein Teil der Feldfläche unbedeckt, ist er breiter, dann überlappen benachbarte Streifen, außerdem gelangt ein Teil des Streuguts in den noch nicht geernteten Bestand und wird erneut aufgenommen, wenn dieser geerntet wird, was die Effektivität der Verarbeitungstrecke beeinträchtigt.

Die EP 1 985 170 offenbart einen Mähdrescher mit einer Streugutverteileinrichtung, die anhand von Informationen gesteuert wird, die ein an den Mähdrescher angeschlossenes Vorsatzgerät repräsentieren. Dafür ist ein Detektor vorgesehen, der die Informationen, beispielsweise die Breite des Vorsatzgerätes, aus einem Speicher des Vorsatzgerätes erfasst. Dadurch kann die Breite des Streugutauswurfs an die Breite des Vorsatzgerätes angepasst werden.

Aus DE 103 42 922 A1 ist ein Fahrzeug der eingangs genannten Art bekannt, nämlich ein Mähdrescher, an dessen Heck als Verteileinrichtung zwei Wurfgebläse mit verstellbarer Wurfrichtung angebracht sind. Indem die Wurfrichtung ständig in einem verstellbaren Winkelbereich hin und her pendelt, wird ein Streugutstreifen erzeugt, dessen Breite einerseits durch die Größe dieses Winkelbereichs und andererseits durch die Flugweite des Streuguts bestimmt ist. Eine Steuereinheit ist mit einem Sensor zum Erfassen der Arbeitsbreite der an dem Mähdrescher montierten Aufnahmeeinrichtung verbunden, um die Größe dieses Winkelbereichs an die erfasste Arbeitsbreite anzupassen.

In der Praxis erweist sich eine solche Anpassung als problematisch, da die Flugeigenschaften des von der Verteileinrichtung ausgestoßenen Streuguts - und damit auch die Breite des Streugutstreifens - von einer Vielzahl von Parametern abhängen. Ein wichtiger Parameter ist beispielsweise der Wassergehalt des Ernteguts. Ein feuchter Streugutpartikel ist im Allgemeinen schwerer als ein gleichgroßer trockener Partikel, so dass, wenn beide von der Verteileinrichtung mit gleicher Geschwindigkeit ausgestoßen werden, der feuchte Partikel im Allgemeinen weiter fliegen wird als der trockene. Der Feuchtegehalt eines erntereifen Pflanzenbestandes kann im Laufe des Tages deutlich variieren; während morgens der Feuchtegehalt im Allgemeinen durch Tau erhöht ist, nimmt er im Laufe eines sonnigen Tages deutlich ab, wodurch eine Anpassung von Betriebsparametern der Verteileinrichtung notwendig werden kann, ohne dass die Aufnahmeeinrichtung gewechselt worden wäre. Eine automatische Anpassung des Betriebs der Verteileinrichtung an die Breite der Aufnahmeeinrichtung ist allerdings von geringem praktischen Wert, wenn nicht garantiert werden kann, dass die Breite des Streifens, auf der das Streugut verteilt wird, tatsächlich mit der Breite der Aufnahmeeinrichtung übereinstimmt.

In der Praxis zeigt sich, dass die Breite des Streugutstreifens noch von anderen Einflüssen als dem Feuchtegehalt abhängen muss, die Fluktuationen der Breite auf einen noch erheblich kürzeren Zeitmaßstab herbeiführen. Ein laufender Ausgleich solcher Fluktuationen durch den Fahrer würde dessen Aufmerksamkeit in hohem Maße in Anspruch nehmen.

Aufgabe der vorliegenden Erfindung ist, ein Fahrzeug der eingangs angegebenen Art zu schaffen, bei dem die Verteileinrichtung in der Lage ist, einen Streugutstreifen von wenig schwankender Breite mit einem Minimum an Unterstützung durch den Fahrer zu erzeugen.

Die Aufgabe wird gelöst, indem bei einem Fahrzeug mit einer Aufnahmeeinrichtung für Erntegut von einer Feldfläche, einer Verarbeitungsstrecke, in der Streugut von dem Erntegut abgeschieden wird, und einer Verteileinrichtung zum Ausstoßen des Streuguts auf die Feldfläche eine Erfassungseinrichtung zum Erfassen des Durchsatzes der Verarbeitungsstrecke vorgesehen ist und eine Steuereinheit mit der Erfassungseinrichtung und der Verteileinrichtung verbunden ist, um wenigstens einen Betriebsparameter der Verteileinrichtung in Abhängigkeit vom Durchsatz zu steuern.

Es zeigt sich nämlich, dass ein Parameter, der die Verteilung des Streuguts auf einem kurzen Zeitmaßstab beeinflusst, der Durchsatz der Verarbeitungsstrecke ist. Die Partikel des Streuguts, die von der Verteileinrichtung ausgestoßen werden, haben im Allgemeinen eine geringe Dichte und werden dementsprechend stark durch den Luftwiderstand verzögert, was dazu führt, dass sie nach kurzer Flugstrecke zu Boden fallen. Je massereicher der Streugutstrom am Ausgang der Verteileinrichtung ist, umso mehr Luft wird vom Streugut mitgerissen. Ein starker Luftstrom bewirkt, dass die Verzögerung der einzelnen Partikel durch den Luftwiderstand abnimmt und die Partikel weiter fliegen. Diesem Effekt kann entgegengewirkt werden, indem ein geeignet ausgewählter Betriebsparameter der Verteileinrichtung in Abhängigkeit vom Durchsatz variiert wird. Welcher Betriebsparameter dies sein kann, hängt von der Bauart der Verteileinrichtung ab. Bei den meisten Verteileinrichtungen besteht die Möglichkeit, die Austrittsgeschwindigkeit des Streuguts als zu steuernden Betriebsparameter heranzuziehen und diese bei hohem Durchsatz niedriger zu wählen als bei niedrigem Durchsatz.

Wenn wenigstens ein Streugutauslass der Verteileinrichtung quer zur Fahrtrichtung pendelnd angetrieben ist, kann als Betriebsparameter auch die Amplitude der Pendelbewegung genutzt werden und wiederum bei hohem Durchsatz niedriger gewählt werden als bei niedrigem Durchsatz.

Wenn der Gutauslass der Verteileinrichtung eine variable Breite hat, kann auch diese Breite bei hohem Durchsatz niedriger gewählt werden als bei niedrigem Durchsatz. So wird eine bei hohem Durchsatz verlängerte Flugstrecke der Partikel dadurch kompensiert, dass die Partikel aufgrund der verringerten Auslassbreite weniger stark quer zur Fahrtrichtung streuen.

Zum Erfassen des Durchsatzes kann ein Sensor an der Verarbeitungsstrecke angeordnet sein. Wenn ein solcher Sensor vor einer Trennstufe angeordnet ist, in der das Streugut vom Erntegut abgetrennt wird, kann ein Durchsatzmesswert des Sensors auch zur Steuerung der Trennstufe herangezogen werden, bzw. es kann ein für die Steuerung der Trennstufe ohnehin vorhandener Sensor ohne Mehrkosten auch für die Steuerung der Verteileinrichtung genutzt werden. Bei der Trennstufe kann es sich insbesondere um ein Dreschwerk handeln.

Der Sensor kann insbesondere ein Schichtdickensensor sein, der die Dicke einer auf der Verarbeitungsstrecke geförderten Schicht des Ernteguts erfasst.

Um zu berücksichtigen, dass das Streugut, auf das sich die Messwerte des Sensors beziehen, erst mit Verzögerung nach der Messung die Verteileinrichtung erreicht, sollte die Steuereinheit den wenigstens einen Betriebsparameter der Verteileinrichtung mit einer dieser Laufzeit entsprechenden Verzögerung steuern.

Eine alternative Möglichkeit zur Abschätzung des Durchsatzes ist, Leistungsaufnahme und Geschwindigkeit der Verteileinrichtung zueinander in Beziehung zu setzen. Je höher bei gegebener Geschwindigkeit die Leistungsaufnahme ist, umso größer muss auch der Massenstrom des Streuguts sein, das in der Verteileinrichtung beschleunigt wird.

Eine Benutzerschnittstelle sollte es einem Benutzer, insbesondere dem Fahrer des Fahrzeugs, ermöglichen, einen funktionalen Zusammenhang zwischen dem Durchsatz und dem wenigstens einen Betriebsparameter der Verteileinrichtung zu wählen. Wenn dieser einmal korrekt eingestellt worden ist, können Schwankungen des Durchsatzes von der Steuereinheit selbsttätig ausgeglichen werden.

Weitere Merkmale und Vorteile der Erfindung ergeben sich aus der nachfolgenden Beschreibung von Ausführungsbeispielen unter Bezugnahme auf die beigefügten Figuren. Es zeigen:

Fig. 1 einen Mähdrescher als Beispiel eines erfindungsgemäßen Fahrzeugs;

Fig. 2 eine schematische Draufsicht auf eine Verteileinrichtung des Mähdreschers;

Fig. 3 eine schematische Draufsicht auf eine alternative Verteileinrichtung;

Fig. 4 eine schematische Draufsicht auf den Mähdrescher im Feldeinsatz;

Fig. 5 eine schematische Draufsicht auf den Mähdrescher beim Übergang in Kurvenfahrt;

Fig. 6 eine Draufsicht auf den Mähdrescher während des Fahrens einer Kurve.

Fig. 7 eine Draufsicht auf den Mähdrescher während des Mähens eines Feldrandstreifens; und

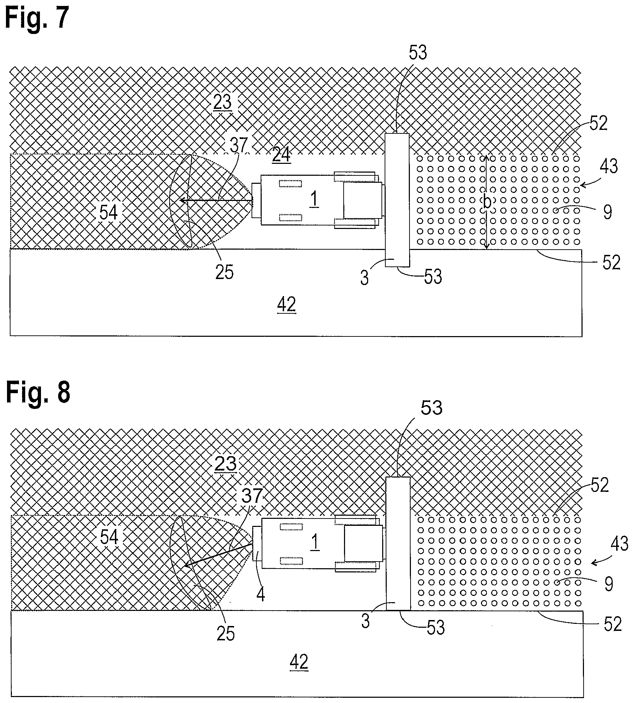

Fig. 7 eine zweite Draufsicht auf den Mähdrescher während des Mähens eines Feldrandstreifens.

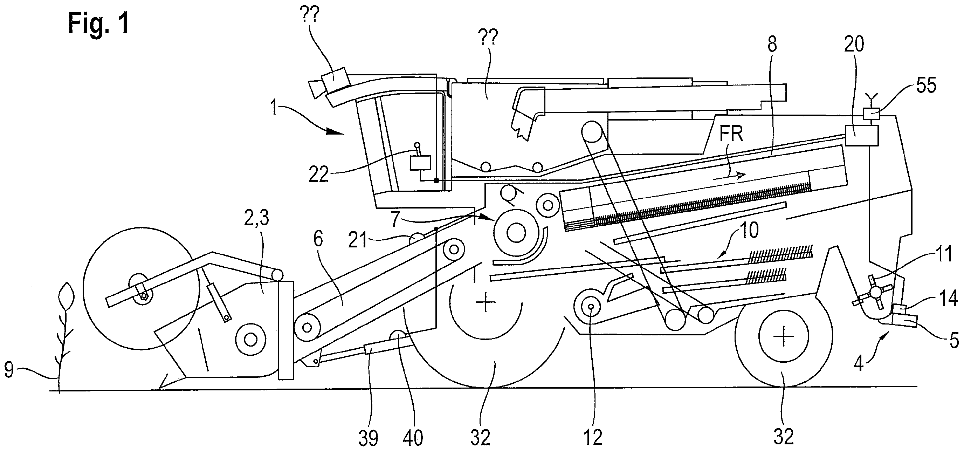

Der in Fig. 1 schematisch dargestellte Mähdrescher 1 hat als Aufnahmeeinrichtung 2 zum Aufnehmen von Erntegut 9 von einer Feldfläche ein Schneidwerk 3, und als Verteileinrichtung 4 an seinem Heck zwei nebeneinander angeordnete Wurfgebläse 5. Eine Verarbeitungsstrecke, die sich vom Schneidwerk 3 zur Verteileinrichtung 4 erstreckt, umfasst einen Schrägförderer 6, eine Drescheinrichtung 7, einen Axialabscheider 8, eine Reinigungseinrichtung 10 und einen Häcksler 11.

Die Höhe des Schneidwerks 3 ist mit Hilfe von zwei Hydraulikzylindern 39 einstellbar, die unter einer rechten bzw. einer linken Flanke des Schrägförderers 6 angeordnet sind und einerseits am Fahrgestell des Mähdreschers 1, andererseits an ein vorderes Ende des Schrägförderers 6 angelenkt sind. An jeden Hydraulikzylinder 39 ist ein Drucksensor 40 zum Erfassen des Öldrucks in einer Arbeitskammer des Hydraulikzylinders 39 angeschlossen,

Der Axialabscheider 8 empfängt ein Korn-Kurzstrohgemisch von der Drescheinrichtung 7 und zerlegt dieses in Stroh, das am Ende des Axialabscheiders 8 austritt und dem Häcksler 11 zugeführt wird, sowie einen im Wesentlichen Korn- und Ährenbruchstücke enthaltenden Strom, der zur Reinigungseinrichtung 10 gelangt. Nichtkornbestandteile dieses Stroms werden in der Reinigungseinrichtung 10 vom Luftstrom eines Gebläses 12 mitgerissen und gelangen über den Häcksler 11 zur Verteileinrichtung 4, während das von Verunreinigungen befreite Korn in einen Tank 13 gefördert wird.

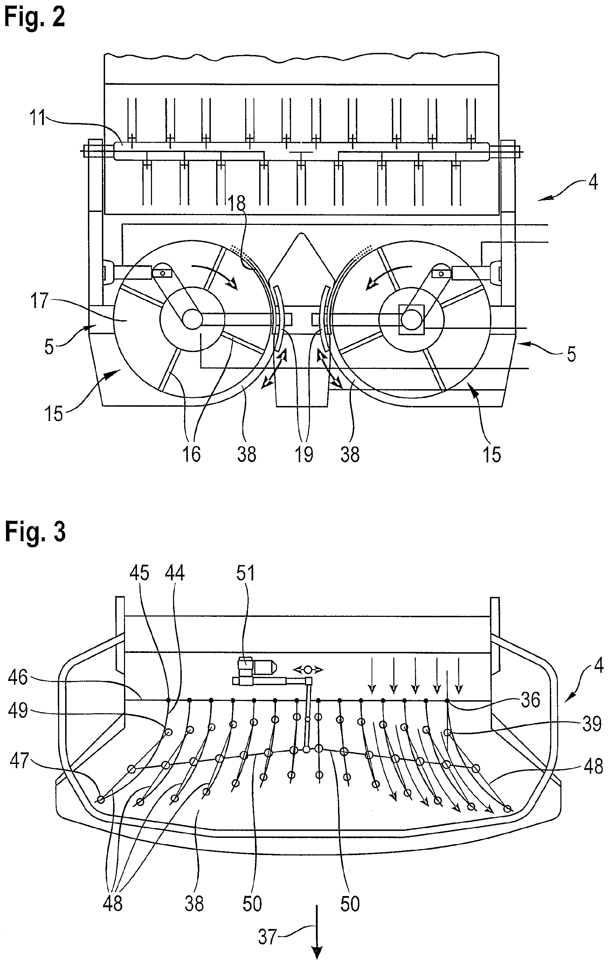

Fig. 2 zeigt die Verteileinrichtung 4 und den Häcksler 11 in einer schematischen Draufsicht. Die zwei Wurfgebläse 5 der Verteileinrichtung 4 umfassen jeweils eine von einem Motor 14 (siehe Fig. 1) und einen um eine im Wesentlichen vertikale Achse drehangetriebenen Rotor 15 mit mehreren radial orientierten Schaufeln 16, die von einer kreisrunden Grundplatte 17 aufragen. Die Grundplatten 17 sind auf einem Teil ihres Umfangs von starren Wänden 18 bzw. von einer Wand 19, die um die Achse des Rotors 15 schwenkbar ist und so einen beweglichen Streugutauslass 38 begrenzt. Streugut aus dem Häcksler 11, das auf die Grundplatten 17 der Rotoren 15 gelangt, wird durch Zentrifugalkraft gegen die Wände 18 bzw. 19 gedrückt und fortgeschleudert, sobald es die Wände 18, 19 hinter sich gelassen und den Streugutauslass 38 erreicht hat. So ist die Richtungsverteilung, mit der eines der Wurfgebläse 5 das Streugut zu einem gegebenen Zeitpunkt fortschleudert, durch die Stellung der schwenkbaren Wände 18 zu diesem Zeitpunkt bestimmt und einigermaßen eng gebündelt, so dass der Gesamtheit des von dem Wurfgebläse 5 zu diesem Zeitpunkt ausgestoßenen Streugut eine momentane Ausstoßrichtung zugeordnet werden kann. Um das Streugut auf einem geraden Streifen hinter dem Mähdrescher zu verteilen, während dieser geradeaus fährt, werden die schwenkbaren Wände 18 fortlaufend hin und her geschwenkt, so dass die momentane Ausstoßrichtung eines jeden Wurfgebläses, d.h. die Richtung des über den gesamten Streugutstrom integrierten Impulses der Streugutpartikel, um eine mittlere Ausstoßrichtung pendelt. Die Breite des dabei entstehenden Streifens aus Streugut hängt ab von den Richtungen, in die momentan das Streugut ausgestoßen wird, also von der Schwenkbewegungsfreiheit der schwenkbaren Wände 18, und von der Geschwindigkeit, mit der die Streugutpartikel die Verteileinrichtung 4 verlassen. Diese ist beeinflussbar über die Drehzahl der Rotoren 15.

Im hier betrachteten Beispiel steuert eine Steuereinheit 20 die Wurfgebläse 5 anhand von Messwerten eines Schichtdickensensors 21, der am Schneidwerk 3, oder wie hier gezeigt, am Schrägförderer 6 angeordnet sein kann, und anhand einer vom Fahrer an einem Regler 22 vorgenommenen Eingabe. Wenn d die vom Sensor 21 erfasste Schichtdicke ist, dann regelt die Steuereinheit 20 die Drehzahl $\omega$ gemäß

$$\omega = a\ f(d) \hspace{4cm} (1)$$

wobei a ein vom Fahrer über den Regler 22 eingestellter Gewichtungsfaktor ist und f eine abnehmende Funktion der Schichtdicke d ist, die empirisch optimiert ist, um den oben erläuterten Unterstützungseffekt durch den Luftstrom am Ausgang der Wurfgebläse 5 zu kompensieren und eine von der Schichtdicke d unabhängige Flugweite der ausgestoßenen Streugutpartikel zu gewährleisten.

Alternativ könnte bei abnehmender Schichtdicke d auch ein größerer Schwenkbewegungsbereich der schwenkbaren Wände 19 eingestellt werde, um die verminderte Flugweite durch eine stärkere Auffächerung des Streugutstroms auszugleichen.

Einer Alternative zufolge empfängt die Steuereinheit 20 die Druckmesswerte der Sensoren 40. Diese setzen sich zusammen aus Beiträgen, die auf das Gewicht des Schneidwerks 3 zurückgehen, und solchen, die auf das Gewicht des Ernteguts im Schneidwerk zurückgehen. Letztere sind direkt proportional zum Massenstrom des Ernteguts durch die Verarbeitungsstrecke. Deswegen ist die Steuereinheit in Kenntnis des Gewichts des Schneidwerks 3 in der Lage, den Massenstrom auch aus den Druckmesswerten der Sensoren 40 zu berechnen.

Einer weiteren Alternative zufolge ermittelt die Steuereinheit 20 die Leistung der Motoren 14, z.B. mittels Sensoren zum Messen von Drehzahl und Drehmoment oder Stromaufnahme der Motoren 14, und setzt diese in Beziehung zur Drehzahl $\omega$. Da die Drehzahl die Geschwindigkeit bestimmt, mit der die Streugutpartikel die Verteileinrichtung 4 verlassen, muss bei gegebener Drehzahl die Leistungsaufnahme der Motoren 14 proportional zum Massendurchsatz der Verteileinrichtung 4 sein, so dass die Steuereinheit durch Messen von Drehzahl und Leistung auf den Massendurchsatz rückschließen kann.

Denkbar ist auch, die Leistung eines Motors des Häckslers 11 zu erfassen, um den Massendurchsatz der Verteileinrichtung abzuschätzen. Der Zusammenhang zwischen dieser Leistung und dem Massendurchsatz ist zwar je nach Art des Ernteguts 9 unterschiedlich, doch wird dieser Unterschied automatisch berücksichtigt, wenn der Fahrer den Gewichtungsfaktor a anpasst.

Die Steuereinheit 20 kann ferner mit einem Navigationssignalempfänger 55, z.B. einem GPS-Empfänger, zur Ermittlung der geographischen Position des Mähdreschers 1 und/oder mit einer Kamera 41 verbunden sein, die auf das einzubringende Erntegut 9 vor dem Schneidwerk 3 ausgerichtet ist.

Fig. 3 zeigt eine an den Häcksler anschließende Ablenkstufe einer Verteileinrichtung alternativer Bauart. In einem sich zum Streugutauslass 38 hin verbreiternden Gehäuse sind mehrere Strömungsleitplatten 44 divergierend angeordnet, um einen vom Häcksler kommenden, rein entgegen der Fahrtrichtung des Mähdreschers orientierten Strom von Streugut seitwärts aufzufächern. Bei dieser Ablenkstufe ist es nicht nötig, fortlaufend Elemente zu verstellen, um bei Geradeausfahrt einen geraden Streugutstreifen zu erzeugen, d. h. die mittlere Ausstoßrichtung, in Fig. 3 dargestellt durch einen Vektor 37, der Verteileinrichtung ist gleich der momentanen Ausstoßrichtung. Sie ist hier entgegengesetzt zur Fahrtrichtung orientiert.

Dem Häcksler zugewandte Enden 45 der flexibel biegsamen Strömungsleitplatten 44 sind an einer Schiene 46 gleichmäßig beabstandet befestigt. Am dem Streugutauslass 38 zugewandten Ende 47 jeder Strömungsleitplatte 44 greift ein Lenker 48 an. Häckslerseitige Enden 49 der Lenker 48 sind am Gehäuse der Verteileinrichtung 4 schwenkbar befestigt. Untereinander sind die Lenker 48 durch in etwa mittig an ihnen angreifende Stellhebel 50 gekoppelt. Die Stellhebel 50 sind ihrerseits an einen Hydraulikzylinder oder einen anderen geeigneten Stellantrieb 51 gekoppelt und durch diesen quer zur Fahrtrichtung verstellbar. Anhand der Fig. 3 ist leicht nachvollziehbar, dass eine Verlagerung der Stellhebel 50 aus der gezeigten symmetrischen Stellung heraus z.B. nach links die Krümmung der Strömungsleitplatten 44 in der rechten Hälfte der Verteileinrichtung verstärkt und sie in der linken Hälfte verringert, so dass die mittlere Ausstoßrichtung 37 aus der gezeigten, zur Fahrtrichtung entgegengesetzten Orientierung nach rechts schwenkt.

Einer nicht eigens in einer Figur dargestellten, abgewandelten Ausgestaltung zufolge umfasst eine Verteileinrichtung zwei Stellantriebe entsprechend dem Stellantrieb 51, von denen einer den Stellhebel 50 links einer in Fig. 3 gezeichneten Längsmittelebene des Mähdreschers oder der Verteileinrichtung und der andere den Stellhebel 50 rechts dieser Längsmittelebene steuert. Indem die Stellantriebe unabhängig voneinander betätigt werden, ist die Ablenkung und Auffächerung des Streuguts rechts der Längsmittelebene unabhängig von Ablenkung und Auffächerung auf der linken Seite steuerbar, und die Rückseite der Verteileinrichtung kann als zwei Streugutauslässe 38 auf verschiedenen Seiten der Längsmittelebene aufweisend angesehen werden, wobei über den Stellhebel 50 die Ausstoßrichtung des Streuguts am einen Auslass 38 unabhängig von der Ausstoßrichtung am anderen Auslass 38 steuerbar ist.

Um bei der Verteileinrichtung der Fig. 3 oder ihrer oben beschriebenen abgewandelten Ausgestaltung nicht nur die Ausstoßrichtung 37, sondern auch die Wurfweite des Streuguts - und damit die Breite eines hinter der Verteileinrichtung 4 gebildeten Streugutstreifens zu variieren, kann auch hier Geschwindigkeit, mit der die Streugutpartikel die Verteileinrichtung 4 verlassen, gesteuert werden, z.B. über die Drehzahl des Häckslers, der das Streugut nicht nur zerkleinert, sondern ihm auch die nötige kinetische Energie zum Durchlaufen der Ablenkstufe verleiht, oder über die Leistung eines Gebläses, das einen den Durchgang des Streuguts durch die Ablenkstufe unterstützenden Luftstrom antreibt.

Eine andere Möglichkeit, die Breite des Streugutstreifens zu steuern, ist, die Schiene 46 mittels eines weiteren Stellantriebs in Fahrtrichtung verstellbar zu machen und die Enden 47 der Strömungsleitplatten 44 in ihrer Längsrichtung verschiebbar mit den Lenkern 48 zu verbinden. Wird z.B. die Schiene 46 aus der gezeigten Stellung entgegen der Fahrtrichtung verschoben, so nimmt die Divergenz der Strömungsleitplatten 44 zu, und das Streugut wird stärker seitwärts abgelenkt; die Breite des Streugutstreifens nimmt zu.

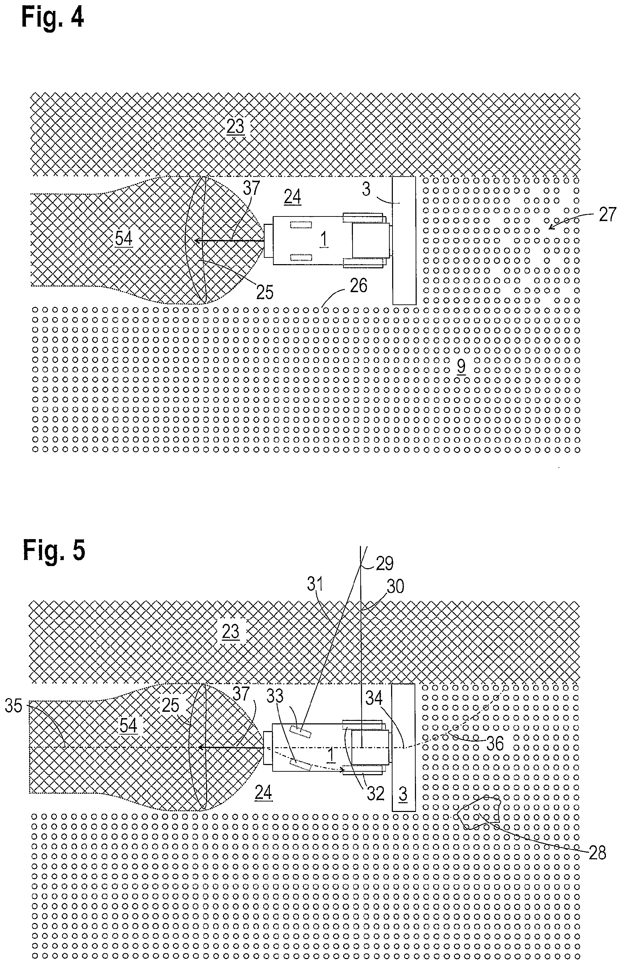

Fig. 4 zeigt den Mähdrescher 1 in einer schematischen Draufsicht beim Abernten einer Feldfläche. Kleine Kreise im unteren und im rechten Teil der Figur symbolisieren den noch unbearbeiteten Bestand des Ernteguts 9. Einen oberen Bereich der Figur bildet ein bereits abgeernteter und mit Streugut, symbolisiert durch eine Kreuz- und Querschraffur, gleichmäßig bedeckter Streifen 23 der Feldfläche. Der Mähdrescher 1 ist im Begriff, einen daran angrenzenden Streifen 24 zu bearbeiten. Der Strom des Streuguts breitet sich von der Verteileinrichtung am Heck des Mähdreschers 1 aus und landet auf der Feldfläche in einem hier sichelförmig dargestellten Landebereich 25. Dessen Breite quer zur Fahrtrichtung des Mähdreschers 1 ist bestimmt durch die Schwenkamplitude der (in Fig. 4 nicht dargestellten) schwenkbaren Wände 19 und die Drehzahl der Rotoren 15. In dem Maße, wie sich der Landebereich 25 über die Feldfläche bewegt, entsteht hinter dem Mähdrescher 1 ein Streugutstreifen 54.

In der dargestellten Position des Mähdreschers 1 ist die Breite des Landebereichs 25 exakt an die Breite des Schneidwerks 3 angepasst, so dass die Breite des Streugutstreifens 54 mit der des abgeernteten Streifens 24 übereinstimmt. Wäre die Drehzahl der Rotoren 15 höher, dann würde das Streugut weiter fliegen und der Landebereich 25 wäre entsprechend größer, so dass jeweils Teile von ihm sich auf dem Streifen 23 bzw. in den Bestand des Ernteguts 9 hinein erstrecken würden. Entsprechend wäre bei zu geringer Drehzahl der Rotoren der Landebereich 25 kleiner, so dass der resultierende Streugutstreifen 54, wie am linken Rand der Figur gezeigt, den Streifen 24 nicht auf seiner gesamten Breite abdeckt.

In der in Fig. 4 gezeigten Situation hat der Fahrer dies vor kurzem erkannt und durch Nachführen des Reglers 22, d.h. Heraufsetzen des Gewichtungsfaktors a, die Breite des Landebereichs 25 in Übereinstimmung mit der Breite des Schneidwerks 3 gebracht.

Wenn der Mähdrescher 1 in einem Bereich mit verminderter Dichte des Ernteguts wie etwa den Bereich 27 in Fig. 4 einfährt, dann führt dies zu einer Abnahme der vom Sensor 21 erfassten Schichtdicke d. Bis das vom Sensor 21 erfasste Erntegut den Mähdrescher 1 durchlaufen hat und entsprechend auch der Massenstrom an der Verteileinrichtung 4 abnimmt, verstreichen einige Sekunden. Die Steuereinheit 20 wartet daher bei Erfassung einer Änderung der Schichtdicke d eine entsprechende Zahl von Sekunden ab, bevor sie anhand der obigen Formel (1) die Drehzahl ω der Rotoren 15 anpasst. So bleibt die Flugweite des Streuguts trotz schwankender Dichte des Pflanzenbestands konstant, die Breite des Landebereichs 25 ändert sich nicht, und der Streifen 24 wird flächendeckend bestreut, ohne dass nennenswert Streugut auf den Nachbarstreifen 23 oder in den Bestand gelangt.

Fig. 5 zeigt den Mähdrescher 1 erneut in einer Draufsicht entsprechend der Fig. 4, wobei diesmal angenommen ist, dass sich vor dem Mähdrescher 1 ein Hindernis 28 befindet. Ein solches Hindernis kann z.B. ein Findling, ein nicht flüchtendes Tier, aber auch ein zur bisherigen Fahrtrichtung des Mähdreschers 1 nicht paralleler Rand der Feldfläche sein. Um einen Zusammenstoß bzw. ein Überfahren des Hindernisses 28 zu vermeiden, muss der Mähdrescher 1 eine Kurve, hier eine Linkskurve, fahren. Den Mittelpunkt 29 dieser Kurve bildet der Kreuzungspunkt zwischen zwei Achslinien 30, 31, um die die nicht lenkbaren Vorderräder 32 bzw. die lenkbaren Hinterräder 33 des Mähdreschers 1 rotieren.

Der Mittelpunkt 34 des Schneidwerks 3 hat sich bis zum in Fig. 5 dargestellten Zeitpunkt auf einer geraden Bahn 35 bewegt. Wenn der Einfachheit halber angenommen wird, dass das Einschlagen der Hinterräder 33 abrupt zum dargestellten Zeitpunkt erfolgt, dann bewegt sich der Mittelpunkt 34 von dann an auf einem Kreisbogen 36.

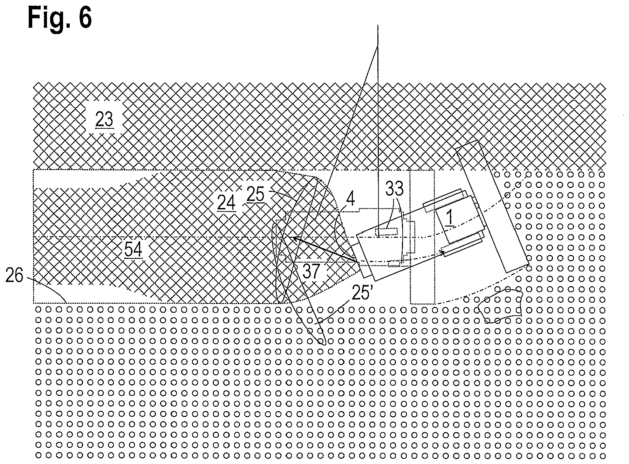

Fig. 6 zeigt den Mähdrescher 1 kurz darauf. Das Heck des Mähdreschers 1 und mit ihm die Verteileinrichtung 4 ist bezogen auf die Fahrtrichtung nach rechts ausgeschwenkt und befindet sich nun deutlich näher an der Kante 26 des Bestands als an der Grenze zum Streifen 23. Um dennoch den Streugutstreifen 54 kongruent zum Streifen 24 auszubringen und zu verhindern, dass Streugut in den Bestand geworfen wird, muss die mittlere Ausstoßrichtung des Streuguts angepasst werden. Während in Fig. 4 und 5 die mittlere Ausstoßrichtung, jeweils dargestellt durch einen Vektor 37, entgegengesetzt zur Fahrtrichtung senkrecht vom Heck des Mähdreschers 1 absteht, würde eine solche Ausrichtung im Falle der Fig. 6, wie anhand des dann geltenden Landebereichs 25' zu erkennen, dazu führen, dass ein großer Teil des Streuguts in den Bestand jenseits der Kante 26 geworfen wird. Um dies zu vermeiden, ist es notwendig, die mittlere Ausstoßrichtung 37 zum Kurvenmittelpunkt 29 hin zu schwenken, so dass der Landebereich 25 weiterhin auf dem Streifen 24 liegt. Eine solche Anpassung der mittleren Ausstoßrichtung könnte allgemein durch Drehen der Verteileinrichtung 4 als Ganzes stattfinden; im hier betrachteten Fall der aus zwei Wurfgebläsen 5 mit schwenkbaren Wänden 18 gebildeten Verteileinrichtung kann die Steuereinheit 20 die mittlere Ausstoßrichtung 37 auch durch Verändern der Winkel, zwischen denen die Wände 18 hin und her schwenken, nachführen.

Die Nachführung erfolgt jeweils mit zeitlicher Verzögerung gegenüber dem sie auslösenden Lenkeinschlag. Zum in Fig. 5 gezeigten Zeitpunkt findet zwar der Lenkeinschlag der Hinterräder 33 statt, doch setzt eine Änderung der Fahrtrichtung des Mähdreschers 1 damit erst allmählich ein. Während dieser beginnt, entlang des Kreisbogens 36 zu fahren, liegt der Landebereich 25 noch auf der zuvor befahrenen geradlinigen Bahn 35, und in dem Maße, in dem der Mähdrescher 1 seine Fahrtrichtung ändert, wird auch die mittlere Ausstoßrichtung 37 kontinuierlich zum Kreuzungspunkt 29 hin geschwenkt. Sie erreicht erst dann einen stationären Wert, wenn auch der Landebereich 25 die geradlinige Bahn 35 hinter sich gelassen und den Kreisbogen 36 erreicht hat. Die Zeitspanne, innerhalb derer die Steuereinheit 20 die mittlere Ausstoßrichtung 37 einem Lenkeinschlag nachführt, sollte demnach der Geschwindigkeit des Mähdreschers 1, dividiert durch den Abstand zwischen Schneidwerk 3 und Landebereich 25, entsprechen.

Fig. 7 zeigt den Mähdrescher 1 beim Bearbeiten eines Reststreifens 43 von Erntegut 9 unmittelbar am Rand der Feldfläche, neben einem Fahrweg 42. Die Breite dieses Reststreifens 43 ist geringer als die des Schneidwerks 3. Würde man diesen Reststreifen 43 mit denselben Einstellungen der Steuerschaltung 20 wie oben mit Bezug auf Fig. 4 beschrieben bearbeiten, dann würde die Steuerschaltung 20 anhand der vom Schichtdickensensor 21 und/oder den Drucksensoren 40 gelieferten Messwerte erkennen, dass der Massenstrom des Ernteguts im Mähdrescher 1 kleiner ist als beim Abernten eines Streifens in der Breite des Schneidwerks, und würde durch Heraufsetzen der Ausstoßgeschwindigkeit des Streuguts und/oder der Schwenkamplitude der Wände 19 bzw. der Divergenz der Strömungsleitplatten 44 versuchen, den Streugutstreifen 54 weiterhin in der Breite des Schneidwerks 3 zu erzeugen. Wenn der Mähdrescher 1 den in Fig. 7 gezeigten Weg fährt, bei dem ein mittiger Abschnitt des Schneidwerks das Erntegut 9 aufnimmt und beiderseits dieses mittigen Abschnitts zwischen den Bestandskanten 52 des Reststreifens 43 und den seitlichen Kanten 53 des Schneidwerks 3 äußere Abschnitte des Schneidwerks 3 unausgelastet bleiben, dann hätte diese Art der Steuerung zur Folge, dass ein Teil des ausgebrachten Streuguts auf dem Fahrweg 42 und ein anderer auf dem bereits zuvor abgeernteten Streifen 23 landet. Dies kann der Fahrer vermeiden, indem er am Regler 22 den Gewichtungsfaktor a heruntersetzt, so dass die Breite des Landebereichs 25 hinter dem Mähdrescher mit der des Reststreifens 43 übereinstimmt. Diese Möglichkeit ist allerdings nicht sonderlich komfortabel, denn zum einen muss der Mähdrescher 1 den Reststreifen 43 exakt mittig anfahren, damit das Streugut auf der zuvor abgeernteten Fläche landet, was z.B. aufgrund von Hindernissen auf dem Fahrweg 42 unmöglich sein kann. Zum anderen muss der Gewichtungsfaktor a spätestens dann von neuem angepasst werden, wenn mit dem Bearbeiten einer neuen Feldfläche begonnen wird, und falls die Breite b des Reststreifens 43 variiert, z.B. weil der Feldrand nicht exakt parallel zum zuvor abgeernteten Streifen 23 ist, kann schon während des Aberntens des Reststreifens 43 eine Anpassung nötig werden. Da der Fahrer die Breite b des Reststreifens 43 ohnehin erfassen und an einem Regler des Mähdreschers einstellen muss, um diesem eine korrekte Abschätzung der bearbeiteten Fläche zu ermöglichen, kann dieser Wert genutzt werden, um die Drehzahl $\omega$ in Verallgemeinerung der obigen Formel (1) nach der Formel

$$\omega = a\, f(d)\, g(b) \qquad\qquad (2)$$

zu steuern, wobei g eine anwachsende Funktion der Breite b ist, die maximal den Wert 1 erreicht, wenn b gleich der Breite des Schneidwerks 3 ist und empirisch ermittelt sein kann.

Einer Weiterentwicklung zufolge kann die Steuereinheit 20 die Breite b selbsttätig aus von der Kamera 41 gelieferten Bildern ermitteln und je nach Bauart der Verteileinrichtung die Drehzahl bzw. die Ausstoßgeschwindigkeit des Streuguts und/oder die Schwenkamplitude der Wände 19 bzw. die Divergenz der Strömungsleitplatten 44 dieser Breite b entsprechend steuern. So kann eine genaue Anpassung der Breite des Streugutstreifens 54 an die Breite des Reststreifens 43 auch dann gewährleistet werden, wenn die Breite des Reststreifens 43 über dessen Länge hinweg variiert.

Wenn die Koordinaten der abzuerntenden Feldfläche der Steuereinheit 20 mit ausreichender Genauigkeit bekannt sind, kann alternativ der Navigationssignalempfänger 55 genutzt werden, um den vom Mähdrescher 1 beim Beernten der Feldfläche zurückgelegten Weg zu verfolgen, daraus die Breite b des noch zu beerntenden Reststreifens 43 zu berechnen und die Drehzahl $\omega$ entsprechend Formel (2) passend zu wählen.

Um Hindernissen auf dem Fahrweg 42 auszuweichen, kann es notwendig sein, den Mähdrescher 1 wie in Fig. 8 gezeigt so zu fahren, dass eine Kante des Schneidwerks 3 mit der dem Fahrweg 42 zugewandten Kante des Reststreifens 43 fluchtet.

Einer Ausgestaltung der Erfindung zufolge erkennt die Steuereinheit 20 diese Situation anhand eines Vergleichs der von den beiden Drucksensoren 40 gelieferten Messwerte. In der in Fig. 8 gezeigten Situation ist die rechte Hälfte des Schneidwerks 3 stärker mit Erntegut beladen als die linke, und dementsprechend ist auch der vom rechten Sensor 40 erfasste Druck höher als der vom linken Sensor 40 erfasst. Anhand dieser Druckdifferenz schätzt die Steuereinheit den Versatz des Mähdreschers 1 relativ zum Reststreifen 43 ab und passt die mittlere Ausstoßrichtung 37 der Verteileinrichtung 4 an. Diese Anpassung kann eine kontinuierliche Funktion der Druckdifferenz sein; einer zweckmäßigen Vereinfachung zufolge unterscheidet die Steuereinheit 20 nur zwischen drei diskreten Einstellungen der Ausstoßrichtung 37: senkrecht nach hinten, wie in Fig. 7 gezeigt, wenn der Betrag der Druckdifferenz unter einem Grenzwert liegt, nach rechts, so dass ein rechter Rand des Landebereichs 25 mit der rechten Kante 53 des Schneidwerks 3 fluchtet, wie in Fig. 8 gezeigt, wenn der vom rechten Sensor 40 erfasste Druck den vom linken Sensor 40 erfassten um mehr als den Grenzwert übersteigt, und nach links, so dass ein linker Rand des Landebereichs 25 mit der linken Kante 53 des Schneidwerks 3 fluchtet, wenn der vom linken Sensor 40 erfasste Druck den vom rechten Sensor 40 erfassten um mehr als den Grenzwert übersteigt.

Einer weiteren Ausgestaltung der Erfindung zufolge erkennt die Steuereinheit 20 einen Versatz zwischen dem Mähdrescher 1 und dem Reststreifen 43 anhand der von der Kamera 41 gelieferten Bilder und passt die mittlere Ausstoßrichtung 37 an diesen Versatz an.

Eine ähnliche Wirkung wie durch die Kamera 41 ist auch mit Hilfe des Navigationssignalempfängers 55 erreichbar: anhand bekannter Koordinaten des Randes der Feldfläche und des unmittelbar vor dem Reststreifen 43 abgemähten Streifens 23 berechnet die Steuereinheit die Koordinaten des Reststreifens 43. Während der Mähdrescher den Reststreifen 43 bearbeitet, berechnet sie die Koordinaten des Mähdreschers 1 und einen sich ggf. aus diesen ergebenden seitlichen Versatz zwischen dem Mähdrescher 1 und dem Restreifen 43, und korrigiert dementsprechend die mittlere Ausstoßrichtung 37 und die Größe des Landebereichs 25, so dass das Streugut genau innerhalb der Grenzen des Reststreifens 43 zu Boden fällt.

**Bezugszeichen**

1    Mähdrescher
2    Aufnahmeeinrichtung
3    Schneidwerk
4    Verteileinrichtung
5    Wurfgebläse
6    Schrägförderer
7    Drescheinrichtung
8    Axialabscheider
9    Erntegut
10    Reinigungseinrichtung
11    Häcksler
12    Gebläse
13    Tank
14    Motor
15    Rotor

EP 2 936 962 B1

16 Schaufel
17 Grundplatte
18 Wand
19 Wand
20 Steuereinheit
21 Schichtdickensensor
22 Regler
23 Streifen
24 Streifen
25 Landebereich
26 Kante
27 Bereich
28 Hindernis
29 Mittelpunkt
30 Achslinie
31 Achslinie
32 Vorderrad
33 Hinterrad
34 Mittelpunkt
35 Bahn
36 Kreisbogen
37 mittlere Ausstoßrichtung
38 Streugutauslass
39 Hydraulikzylinder
40 Drucksensor
41 Kamera
42 Fahrweg
43 Reststreifen
44 Strömungsleitplatte
45 Ende (der Strömungsleitplatte)
46 Schiene
47 Ende (der Strömungsleitplatte)
48 Lenker
49 Ende (des Lenkers)
50 Stellhebel
51 Stellantrieb
52 Bestandskante
53 Kante (des Schneidwerks)
54 Streugutstreifen
55 Navigationssignalempfänger

**Patentansprüche**

1. Fahrzeug mit einer Aufnahmeeinrichtung (3) für Erntegut (9) von einer Feldfläche, einer Verarbeitungsstrecke, in der Streugut von dem Erntegut abgeschieden wird, einer Verteileinrichtung (4) zum Ausstoßen des Streuguts auf die Feldfläche, und einer Steuereinheit (20), die mit der Verteileinrichtung (4) verbunden ist, **gekennzeichnet durch** eine Erfassungseinrichtung (21) zum Erfassen des Durchsatzes der Verarbeitungsstrecke, wobei die Steuereinheit (20), mit der Erfassungseinrichtung (21) verbunden ist, um wenigstens einen Betriebsparameter der Verteileinrichtung (4) in Abhängigkeit vom Durchsatz zu steuern.

2. Fahrzeug nach Anspruch 1, **dadurch gekennzeichnet, dass** der wenigstens eine Betriebsparameter die Austrittsgeschwindigkeit des Streuguts aus der Verteileinrichtung (4) ist und bei hohem Durchsatz niedriger gewählt ist als bei niedrigem Durchsatz.

3. Fahrzeug nach Anspruch 1 oder 2, **dadurch gekennzeichnet, dass** wenigstens ein Streugutauslass (38) der Verteileinrichtung (4) eine quer zur Fahrtrichtung pendelnd angetriebene Begrenzung hat.

**4.** Fahrzeug nach Anspruch 3, **dadurch gekennzeichnet, dass** der wenigstens eine Betriebsparameter die Amplitude der Pendelbewegung ist und bei hohem Durchsatz niedriger gewählt ist als bei niedrigem Durchsatz.

**5.** Fahrzeug nach Anspruch 1, 2 oder 3, **dadurch gekennzeichnet, dass** wenigstens ein Streugutauslass der Verteileinrichtung eine variable Breite hat, und dass der wenigstens eine Betriebsparameter diese Breite ist und bei hohem Durchsatz niedriger gewählt ist als bei niedrigem Durchsatz.

**6.** Fahrzeug nach einem der vorhergehenden Ansprüche, **dadurch gekennzeichnet, dass** die Verteileinrichtung fächerartig angeordnete Strömungsleitplatten aufweist und dass der wenigstens eine Betriebsparameter die Divergenz der Strömungsleitplatten ist.

**7.** Fahrzeug nach einem der vorhergehenden Ansprüche, **dadurch gekennzeichnet, dass** die Erfassungseinrichtung einen Sensor (21) umfasst, der an der Verarbeitungsstrecke vor einer Trennstufe, insbesondere vor einem Dreschwerk (7), angeordnet ist, die den Streugutstrom vom Erntegutstrom abscheidet.

**8.** Fahrzeug nach Anspruch 7, **dadurch gekennzeichnet, dass** der Sensor (21) ein Schichtdickensensor ist.

**9.** Fahrzeug nach Anspruch 7 oder 8, **dadurch gekennzeichnet, dass** die Steuereinheit (20) den wenigstens einen Betriebsparameter mit einer Verzögerung steuert, die der Laufzeit vom Sensor (21) zur Verteileinrichtung (4) entspricht.

**10.** Fahrzeug nach einem der Ansprüche 1 bis 6, **dadurch gekennzeichnet, dass** die Erfassungseinrichtung (21) eingerichtet ist, den Durchsatz anhand von Leistungsaufnahme und Geschwindigkeit der Verteileinrichtung (4) abzuschätzen.

**11.** Fahrzeug nach einem der vorhergehenden Ansprüche, **gekennzeichnet durch** eine Benutzerschnittstelle (22), die es einem Benutzer ermöglicht, einen funktionalen Zusammenhang zwischen dem Durchsatz und dem wenigstens einen Betriebsparameter der Verteileinrichtung (4) zu wählen.

**Claims**

**1.** A vehicle comprising a pick-up device (3) for crop material (9) from a field surface, a processing section in which spreading material is separated from the crop material, a distribution device (4) for ejecting the spreading material on to the field surface, and a control unit (20) connected to the distribution device (4), **characterised by** a detection device (21) for detecting the throughput of the processing section, wherein the control unit (20) is connected to the detection device (21) to control at least one operating parameter of the distribution device (4) in dependence on the throughput.

**2.** A vehicle according to claim 1 **characterised in that** the at least one operating parameter is the ejection speed of the spreading material from the distribution device (4) and is selected to be lower with a high throughput than with a low throughput.

**3.** A vehicle according to claim 1 or claim 2 **characterised in that** at least one spreading material outlet (38) of the distribution device (4) has a boundary means driven swingingly transversely relative to the direction of travel.

**4.** A vehicle according to claim 3 **characterised in that** the at least one operating parameter is the amplitude of the swinging movement and is selected to be lower with a high throughput than with a low throughput.

**5.** A vehicle according to claim 1, claim 2 or claim 3 **characterised in that** at least one spreading material outlet of the distribution device is of a variable width and the at least one operating parameter is said width and is selected to be lower with a high throughput than with a low throughput.

**6.** A vehicle according to one of the preceding claims **characterised in that** the distribution device has flow guide plates arranged in fan-like manner and the at least one operating parameter is the divergence of the flow guide plates.

**7.** A vehicle according to one of the preceding claims **characterised in that** the detection device includes a sensor (21) arranged at the processing section in front of a separating stage, in particular in front of a threshing mechanism (7), that separates the spreading material flow from the crop material flow.

8. A vehicle according to claim 7 **characterised in that** the sensor (21) is a layer thickness sensor.

9. A vehicle according to claim 7 or claim 8 **characterised in that** the control unit (20) controls the at least one operating parameter with a delay corresponding to the transit time from the sensor (21) to the distribution device (4).

10. A vehicle according to one of claims 1 to 6 **characterised in that** the detection device (21) is adapted to estimate the throughput on the basis of the power consumption and the speed of the distribution device (4).

11. A vehicle according to one of the preceding claims **characterised by** a user interface (22) which makes it possible for a user to select a functional relationship between the throughput and the at least one operating parameter of the distribution device (4).

**Revendications**

1. Véhicule comprenant un équipement de ramassage (3) pour du produit de récolte (9) sur une surface de champ, un parcours de traitement dans lequel du produit d'épandage est séparé du produit de récolte, un équipement d'épandage (4) pour éjecter le produit d'épandage sur la surface de champ, et une unité de commande (20) qui est reliée à l'équipement d'épandage (4), **caractérisé par** un équipement de détection (21) pour détecter le débit du parcours de traitement, l'unité de commande (20) étant reliée à l'équipement de détection (21) pour commander au moins un paramètre d'exploitation de l'équipement d'épandage (4) en fonction du débit.

2. Véhicule selon la revendication 1, **caractérisé en ce que** le au moins un paramètre d'exploitation est la vitesse de sortie du produit d'épandage hors de l'équipement d'épandage (4), laquelle est choisie plus réduite à débit élevé qu'à faible débit.

3. Véhicule selon la revendication 1 ou 2, **caractérisé en ce qu'**au moins une sortie de produit d'épandage (38) de l'équipement d'épandage (4) possède un moyen de limitation entraîné de façon oscillante transversalement au sens de la marche.

4. Véhicule selon la revendication 3, **caractérisé en ce que** le au moins un paramètre d'exploitation est l'amplitude du mouvement oscillant, laquelle est choisie plus réduite à débit élevé qu'à faible débit.

5. Véhicule selon la revendication 1, 2 ou 3, **caractérisé en ce qu'**au moins une sortie de produit d'épandage de l'équipement d'épandage possède une largeur variable, et **en ce que** le au moins un paramètre d'exploitation est cette largeur, laquelle est choisie plus réduite à débit élevé qu'à faible débit.

6. Véhicule selon une des revendications précédentes, **caractérisé en ce que** l'équipement d'épandage comporte des plaques déflectrices d'écoulement disposées en éventail, et **en ce que** le au moins un paramètre d'exploitation est la divergence des plaques déflectrices d'écoulement.

7. Véhicule selon une des revendications précédentes, **caractérisé en ce que** l'équipement de détection comprend un capteur (21) qui est disposé sur le parcours de traitement avant un étage de séparation, en particulier avant un système de battage (7), lequel sépare le flux de produit d'épandage du flux de produit de récolte.

8. Véhicule selon la revendication 7, **caractérisé en ce que** le capteur (21) est un capteur d'épaisseur de couche.

9. Véhicule selon la revendication 7 ou 8, **caractérisé en ce que** l'unité de commande (20) commande le au moins un paramètre d'exploitation avec un retard qui correspond au temps de parcours depuis le capteur (21) jusqu'à l'équipement d'épandage (4).

10. Véhicule selon une des revendications 1 à 6, **caractérisé en ce que** l'équipement de détection (21) est agencé pour estimer le débit sur la base de la consommation de puissance et de la vitesse de l'équipement d'épandage (4).

11. Véhicule selon une des revendications précédentes, **caractérisé par** une interface utilisateur (22) qui permet à l'utilisateur de sélectionner un rapport fonctionnel entre le débit et le au moins un paramètre d'exploitation de l'équipement d'épandage (4).

**Fig. 1**

EP 2 936 962 B1

## Fig. 2

## Fig. 3

# Fig. 4

# Fig. 5

## Fig. 6

## Fig. 7

## Fig. 8

**IN DER BESCHREIBUNG AUFGEFÜHRTE DOKUMENTE**

**In der Beschreibung aufgeführte Patentdokumente**

- EP 1985170 A
- DE 10342922 A1